Europäisches Patentamt

European Patent Office

Office européen des brevets

(19)

(11) Veröffentlichungsnummer : **0 042 133**
**B1**

(12) # EUROPÄISCHE PATENTSCHRIFT

(45) Veröffentlichungstag der Patentschrift :
02.05.84

(21) Anmeldenummer : 81104450.2

(22) Anmeldetag : 10.06.81

(51) Int. Cl.³ : **H 04 N 7/16**

(54) **Dienstintegriertes Nachrichtenübertragungs- und Vermittlungssystem.**

(30) Priorität : 18.06.80 DE 3022725

(43) Veröffentlichungstag der Anmeldung :
23.12.81 Patentblatt 81/51

(45) Bekanntmachung des Hinweises auf die Patenterteilung : 02.05.84 Patentblatt 84/18

(84) Benannte Vertragsstaaten :
AT BE CH DE FR GB IT LI LU NL SE

(56) Entgegenhaltungen :
DE-A- 2 725 250
US-A- 3 836 888
US-A- 3 885 217
US-A- 3 886 302
US-A- 4 041 398
US-A- 4 090 220
COMPUTER DESIGN, Band 17, Nr. 12, Dezember
1978, Seiten 85-92 Concord Mass., U.S.A. J.F. WAN-
NER: "Wideband communication system improves
response time"
TELECOMMUNICATIONS AND RADIO ENGINEER-
ING, Band 25/26, Nr. 9, September 1971, Seiten 18-
21 Washington, U.S.A. B.K. BARANOVSKIY: "New
equipment for monitoring and controlling urban wire
broadcast networks"

(73) Patentinhaber : ANT Nachrichtentechnik GmbH
Gerberstrasse 33
D-7150 Backnang (DE)

(72) Erfinder : Gohm, Lothar
Einsteinstrasse 2
D-7153 Weissach im Tal (DE)
Erfinder : Krull, Klaus
Kantstrasse 2
D-7153 Weissach im Tal (DE)

(74) Vertreter : Schickle, Gerhard, Dipl.-Ing. et al
ANT Nachrichtentechnik GmbH Patent- und
Lizenzabteilung Gerberstrasse 33
D-7150 Backnang (DE)

## Dienstintegriertes Nachrichtenübertragungs- und Vermittlungssystem

Die Erfindung bezieht sich auf ein dienstintegriertes Nachrichtenübertragungs- und Vermittlungssystem für Ton, Bild und Daten mit Vermittlungseinrichtung und einer Anzahl daran mittels Lichtleitkabeln angeschlossener Teilnehmergeräte, die über Wähl- bzw. Empfangseinrichtungen zur Anwahl bzw. zum Empfang bestimmter Dienste bzw. deren Programmen, die über gegebenenfalls ebenfalls wählbare Übertragungskanäle übertragen werden, verfügen, gemäß Oberbegriff des Anspruchs 1.

Ein solches System ist durch die DE-OS 2 900 813 bekannt geworden. Nachteilig ist bei diesem System, daß bei Fehlern bei der Übertragung der Wahlsignale bzw. bei Fehlern in der Vermittlungseinrichtung das übertragene Programm nicht dem Teilnehmerwunsch entspricht. Der Teilnehmer kann die Übereinstimmung zwischen gewählten und gelieferten Programm unter Umständen nicht sofort erkennen, insbesondere bei Rundfunkprogrammen.

Durch die amerikanische Patentschrift 4,090, 220 ist ein Rundfunkverteilsystem bekanntgeworden, bei dem dem Verteilprogramm ein 55-bit-Wort mittels Frequenzumtastung eines Außerband-Trägers beigefügt wird und wobei dieses Wort beim Teilnehmer ausgewertet und mit den Befehlen und Meldungen der Teilnehmerstelle versehen, durch gedoppelte Träger an die Zentrale zurückgesendet wird und wobei dem Teilnehmer die Kanal-Nummer und andere Informationen wie Kostengruppe, Klasse usw. des empfangenen Programms angezeigt werden.

Die US-Patentschrift 4,041,398 betrifft ein bidirektionales digitales Kommunikationsnetz mit einem zentralen Rechner, welcher zugleich die einzelnen Teilnehmer mittels Adreßwort abfragt, das an den Teilnehmer abgesendet und von dort wieder zurückübertragen wird, nachdem es mit Kommunikationswünschen und Meldungen beladen wurde, und wobei dem Benützer mittels Anzeige der Empfang der Kommunikationswünsche durch den Rechner quittiert wird.

Die Aufgabe, die zur Erfindung führte war, ein System der obengenannten Art anzugeben, bei dem der Teilnehmer nach erfolgter Wahl eines Programms sofort erkennen kann, ob das gelieferte mit dem gewählten Programm übereinstimmt. Dabei sollte die Lösung möglichst unaufwendig sein.

Die Lösung erfolgt mit den in den Ansprüchen angegebenen Mitteln.

Durch die Erfindung ist es möglich, daß ein Teilnehmer sofort nach Wahl eines Programms feststellen kann, ob das gelieferte Programm mit dem gewählten bzw. gewünschten übereinstimmt. Bei Nichtübereinstimmung, die beispielsweise durch Fehler in der Übertragung der Wahlsignale oder durch Fehler innerhalb der Vermitlungseinrichtung hervorgerufen werden kann, ist es dem Teilnehmer sofort möglich, erneut das gewünschte Programm zu wählen. Dem Teilnehmer wird somit sehr viel Ärger erspart, wenn er erst nach längerer Zeit feststellen muß, daß er das falsche Programm gehört bzw. gesehen hat. Außerdem ist es möglich, durch Einsatz eines Vergleichers und eines automatischen Wahlwiederholers die Benutzungsfreundlichkeit noch weiter zu steigern, indem der Benutzer nur einmal seinen Wahlwunsch abzugeben hat. Bei zusätzlichem Einsatz eines Mikroprozesses, der zeitabhängige Programmwünsche entgegennehmen kann, ist es dadurch möglich, Bild- oder Tonspeicher zur automatischen Aufnahme von bestimmten vom Benutzer vorgewählten Sendungen so einzusetzen, daß auch bei Fehlern in der Übertragung der Wahlsignale oder bei Fehlern in der Vermittlungseinrichtung die richtige gewünschte Sendung abgespeichert wird. Das wird auch nicht bei starken Übertragungsstörungen eingebüßt, wenn dem Mikrorechner eine genügend lange Vorlaufzeit vor Beginn der eigentlichen Sendung gegeben wird, so daß im Fehlerfall eine Anzahl Wiederholungen ermöglicht wird, die es mit genügend hoher Wahrscheinlichkeit ermöglichen, daß rechtzeitig mit Beginn der betreffenden ausgewählten Programmsendung die richtige Sendung beim Teilnehmer zum Empfang ansteht.

Es folgt nun eine Beschreibung der Erfindung anhand der Figuren.

Figur 1 zeigt das Blockschaltbild des gesamten Systems nach einer erfindungsgemäßen Ausgestaltung,

Figuren 2 und 3 zeigen gemäß Figur 1 Einzelheiten der Quittierungsschaltung beim Teilnehmergerät bzw. in der Vermittlungseinrichtung.

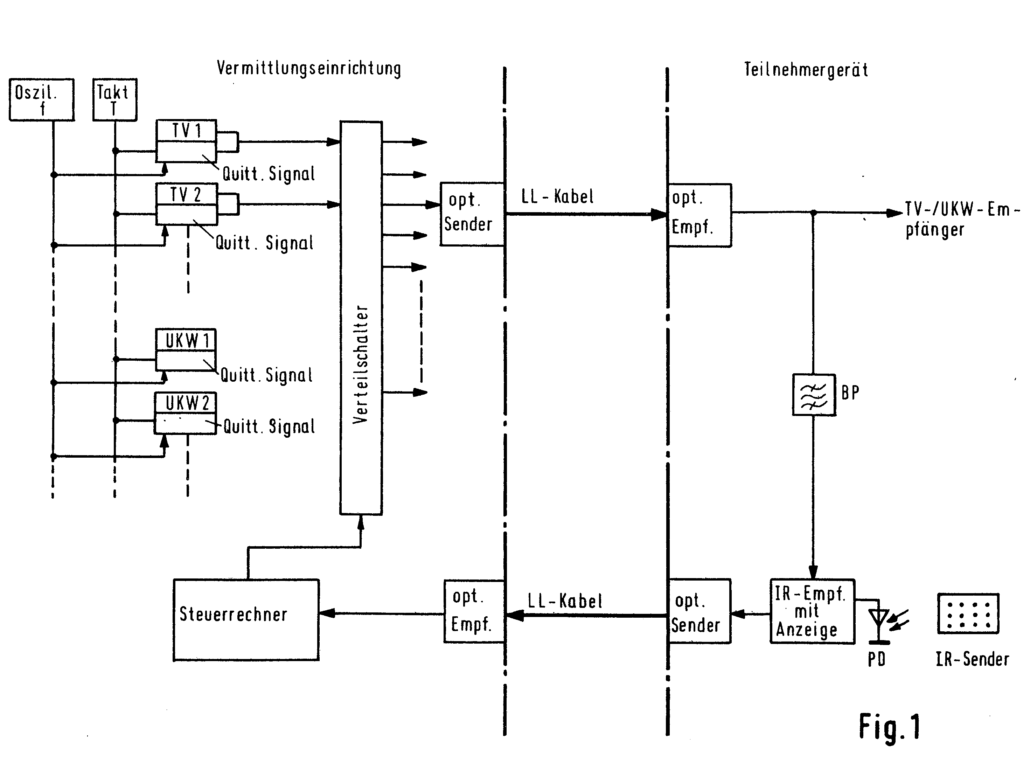

In der Figur 1 sind links Teile der Vermittlungseinrichtung und rechts Teile des Teilnehmergerätes gezeichnet, die über zwei Lichtleitkabel, je eines für eine Übertragungsrichtung, miteinander verbunden sind. Beim Teilnehmergerät seien TV- bzw. UKW-Empfänger vorhanden, die über einen optischen Empfänger, über das eine Lichtleitkabel, und über einen optischen Sender in der Vermittlungseinrichtung mit letzterer verbunden sind. Zur Anwahl der Vermittlungsdienste bzw. deren Programme kann das (Fern-) Bedienungsgerät eines Fernsehempfängers benutzt werden. In Figur 1 ist eine Wahltastatur mit Infrarotsender als Wahleinrichtung gezeichnet. Die Infrarotwahlimpulse gelangen auf eine Fotodiode PD, die an einen Infrarotempfänger mit nachfolgendem Umsetzer angeschlossen ist. Die umgesetzten Wahlimpulse werden anschließend moduliert und auf einen optischen Sender gegeben, der über das andere Lichtleitkabel mit dem optischen Empfänger und weiter mit dem Steuerrechner der Vermittlungseinrichtung verbunden ist. Durch den Steuerrechner werden die demodulierten Wahlimpulse decodiert nach Dienstnummer, Programmnummer und Übertragungskanalnummer. Entsprechend dem Telegramminhalt wird in einem Verteilerschalter der Vermittlungseinrichtung durch den Steuerrechner das ausgewählte Programm auf den optischen Sender des ausgewählten Übertragungskanals geschaltet, wodurch das ausgewählte Programm über das erste Lichtleitkabel zum wählenden Teilnehmer übertragen werden kann.

In der Vermittlungseinrichtung ist eine Quittierungseinrichtung vorgesehen, die dem Programmsignal ein Quittierungssignal zur gemeinsamen Übertragung hinzumischt. Das Quittierungssignal besteht aus einer Trägerfrequenz f, die außerhalb der Programmsignalfrequenz liegt und die entsprechend dem Inhalt eines Schieberegisterquittungsspeichers mit dem Takt T ein- bzw. ausgetastet wird. Zusammen mit dem Programmsignal gelangt das Quittierungssignal zum Teilnehmergerät, wo es mittels eines Bandpasses BP ausgefiltert, anschließend demoduliert, umgesetzt und zur Anzeige gebracht wird.

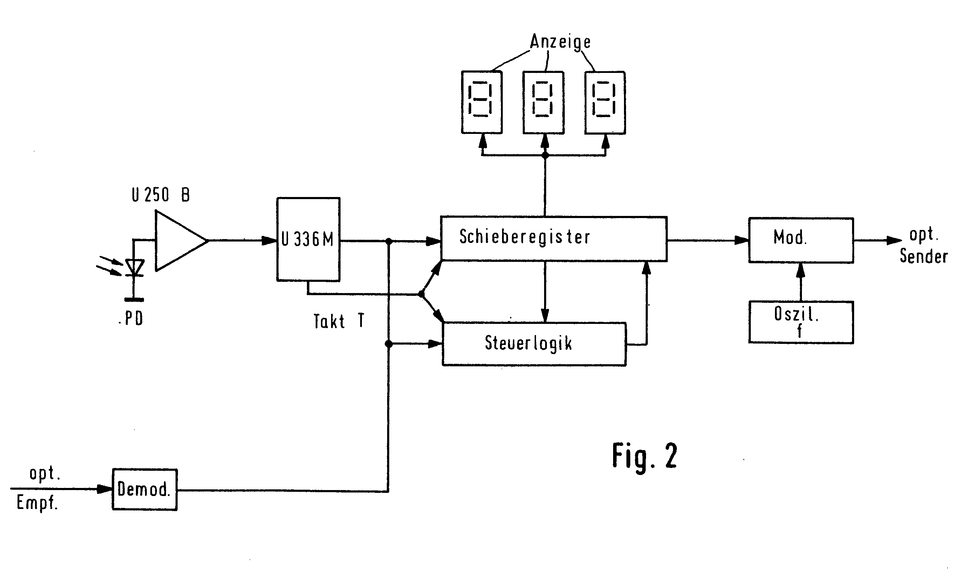

In Figur 2 sind mehrere Einzelheiten der Quittierungseinrichtung auf der Teilnehmergeräteseite gezeichnet. Vom optischen Empfänger gelangt das Quittierungssignal zu einem Demodulator und anschließend in ein Schieberegister, wo es mit Hilfe einer Steuerlogik an die richtigen Speicherplätze geschoben wird, so daß es auf einer Anzeige sichtbar gemacht werden kann. In der Figur 2 sind weiterhin der Fernbedienungsempfängerbaustein U336M sowie der Operationsverstärkerbaustein U250B, welcher die Empfangssignale der Fotodiode PD verstärkt, gezeichnet. Über den Fernbedienungsempfänger U336M können die Wahlsignale, die den gleichen Code wie die Quittierungssignale aufweisen, ebenefalls in das Schieberegister gelangen, aus dem sie mittels der Steuerlogik zum Modulator geschoben werden, indem sie mit der Trägerfrequenz f moduliert und anschließend dem optischen Sender zur Übertragung an die Vermittlungseinrichtung übergeben werden.

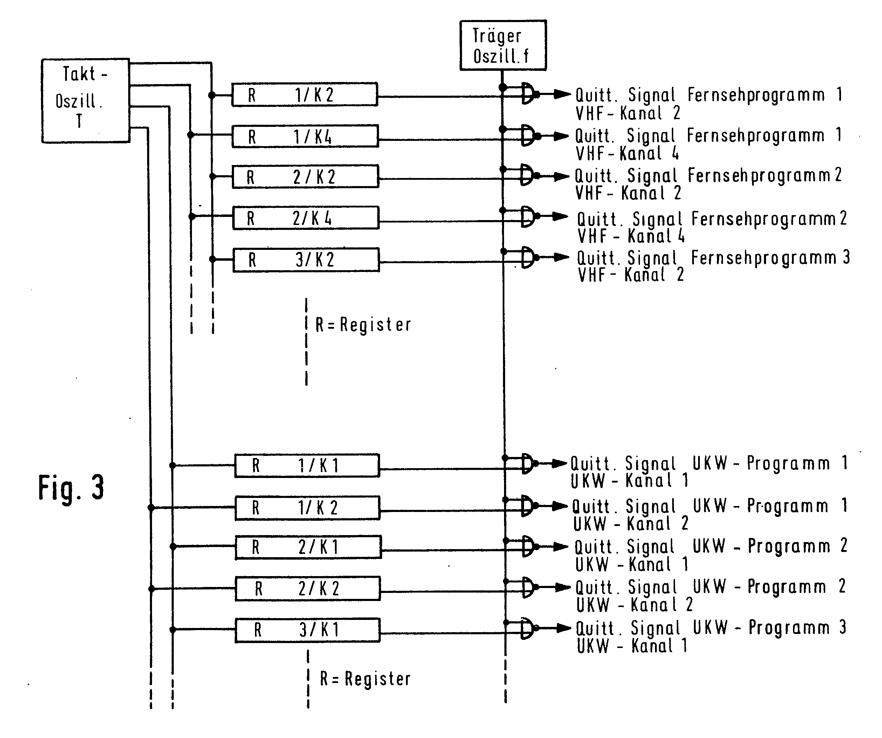

In Figur 3 sind weitere Einzelheiten der Quittierungseinrichtung auf der Seite der Vermittlungseinrichtung gezeichnet. Auf der linken Seite sind übereinander mehrere Schieberegister in zwei Gruppen angeordnet, wobei die obere Gruppe dem Fernsehdienst und die untere dem UKW-Dienst zugeordnet ist. Jedes dieser Register ist einem Programm und einem der insgesamt vier bereitgestellten Übertragungskanäle K1 bis K4 zugeordnet und enthält eine dementsprechende Quittierungskennung. Die Ausgänge dieser Schieberegister, die mit dem Schiebetakt T beaufschlagt sind, sind jeweils auf den einen Eingang eines zugeordneten NOR-Verknüpfungsgliedes geschaltet, dessen anderer Eingang an den die Trägerfrequenz f liefernden Trägeroszillator gelegt sind. Die Ausgänge der NOR-Verknüpfungsglieder liefern jeweils das dem einzelnen Programm der Dienste und dem Übertragungskanal zugeordnete Quittierungssignal, das dem Programmsignal zugemischt wird.

Für das Format des Quittierungs- bzw. Anwahltelegramms wird vorteilhafterweise ein Block von 14 Bit verwendet, dessen Bits die folgende Bedeutung haben.

Bit 1 erstes Präambelbit

Bit 2 bis 5 binärcodierte erste Ziffer, die der Zehnerstelle der gewählten Programmnummer entspricht

Bit 6 Übertragungskanalnummer (der beispielsweise auch ein Raum beim Teilnehmer zugeordnet werden kann)

Bit 7 Dienst

Bit 8 zweites Präambelbit

Bit 9 bis 12 binär codierte Ziffer 2, die der Einerstelle der gewählten Programmnummer entspricht

Bit 13 Übertragungskanalnummer (siehe Bit 6)

Bit 14 Dienst,

wobei das mit binär 1 gesetzte Präambelbit jeweils den Anfang eines Befehlswortes darstellt.

Wenn, wie bei dem Ausführungsbeispiel der Erfindung dargestellt, der Teilnehmer über mehrere Empfangsgeräte verfügt, die gleichzeitig über die hier maximal 4 vorhandenen Übertragungskanäle betrieben werden, so werden vorteilhafterweise Wahl- bzw. Quittierungssignale zeitlich nacheinander übertragen.

Wie allseits bekannt ist, kann innerhalb eines Wohnraumes beim Teilnehmer jeweils nur ein Fernbedienungsinfrarotempfänger betrieben werden, da sonst die Reflexionen des Infrarotsignales an Wänden usw. zu fehlerhaftem Empfang führen können. Sind nun in einem Raum beispielsweise ein Fernsehgerät und ein Rundfunkgerät vorhanden, die jeweils mit Fernbedienungseinrichtungen versehen sind, und weist die erfindungsgemäßen Quittierungseinrichtung nur eine gemeinsame Quittierungsanzeige auf, so wird vorteilhafterweise der jeweils zuletzt gewählte Dienst mit zugehörender Programmziffer angezeigt. Wird bei gleichzeitigem Betrieb des Fernseh- und Rundfunkgerätes eine Programmanzeige des erstgewählten Dienstes gewünscht, so ist dies durch eine entsprechende Tasteingabe « Fernsehen » bzw. « Rundfunk » beim Fernbedienungssender möglich, da beide Quittierungssignale abspeicherbar sind.

Wie aus den Figuren 1 oder 2 erkennbar, ist auch das Anwahlsignal, das zur Zentrale übertragen werden soll, auf der Anzeige anzeigbar. Der Teilnehmer kann leicht eine eventuelle Differenz zu dem nach Programmvermittlung angezeigten Quittierungssignal erkennen.

Durch Betätigung der Taste « Aus » an der Fernbedienungseinrichtung kann die Anzeige abgeschaltet werden. Eine erneute Einschaltung der Anzeige wird durch Betätigung der der ersten Programmziffer entsprechenden Taste eingeleitet.

Für die Anzeige genügt vorteilhafterweise eine solche für drei Zeichen, so daß beispielsweise UO5 für UKW-Rundfunkprogramm Nr. 5 oder FO6 für Fernsehprogramm 6 stehen. Selbstverständlich kann auch eine längere Anzeige realisiert werden, womit eine Raumkennung bzw. Übertragungskanalnummer zusätzlich anzeigbar sind.

Auch eine doppelte Anzeige ist denkbar, wobei jeweils eine einem Empfangsgerät fest zugeordnet ist.

## Ansprüche

1. Dienstintegriertes Nachrichtenübertragungs- und Vermittlungssystem für Ton, Bild und Daten mit Vermittlungseinrichtung und einer Anzahl daran mittels Lichtleitkabeln (LL-Kabel) angeschlossener Teilnehmergeräte, die über Wähl- bzw. Empfangseinrichtungen zur Anwahl bzw. zum Empfang bestimmter Dienste bzw. deren Programmen, die über gegebenenfalls ebenfalls wählbare Übertragungskanäle übertragen werden, verfügen, wobei eine Quittierungseinrichtung vorgesehen ist, mittels der dem Teilnehmer die Vermittlung der Dienste quittierbar ist, wobei die Quittierung die Nummer des Dienstes, die Nummer des Programms und die Nummer des benutzten Übertragungskanals beinhaltet, wobei die teilnehmerseitig mittels einer Wähleinrichtung erzeugten Anwahlsignale moduliert und zur Vermittlungseinrichtung übertragen, dort demoduliert und decodiert werden und wobei die Quittierungssignale gemeinsam mit den Signalen des gewählten Programms moduliert zum Teilnehmergerät übertragen werden, dort demoduliert bzw. decodiert werden und auf einer Anzeigevorrichtung anzeigbar sind, dadurch gekennzeichnet, daß in der Vermittlungseinrichtung den Diensten, den Programmen und den Übertragungskanälen jeweils ein Speicher zugeordnet ist, der die jeweilige Nummer beinhaltet und bei Anwahl ausgelesen wird, daß die ausgelesenen Speicherinhalte die Quittierungssignale (Quitt. Signal) ergeben und daß die Anwahlsignale ebenfalls auf der Anzeigevorrichtung (Anzeige) anzeigbar sind.

2. Dienstintegriertes Nachrichtenübertragungs- und Vermittlungssystem nach Anspruch 1, dadurch gekennzeichnet, daß die Modulation der Anwahl- und Quittierungssignale durch Ein-/Austastung einer Trägerfrequenz (f) erfolgt.

3. Dienstintegriertes Nachrichtenübertragungs- und Vermittlungssystem nach Anspruch 1 und 2, dadurch gekennzeichnet, daß der Speicher ein mit dem Takt (T) taktbares Schieberegister (R) ist, dessen Ausgang auf den einen Eingang eines Verknüpfungsgliedes geführt ist, auf dessen anderen Eingang die Trägerfrequenz (f) gegeben ist und dessen Ausgang auf den gewählten Übertragungskanal schaltbar ist.

4. Dienstintegriertes Nachrichtenübertragungs- und Vermittlungssystem nach Anspruch 1 und 2 oder 3, dadurch gekennzeichnet, daß die Quittierungseinrichtung beim Teilnehmergerät ein Schieberegister enthält, dessen Parallel-Ausgänge mit den Eingängen der Anzeigevorrichtung (Anzeige), dessen serieller Eingang mit der Wähleinrichtung bzw. mit dem optischen Empfänger (opt. Empf.) des Lichtleitkabels (LL-Kabel) und dessen serieller Ausgang mit dem optischen Sender (opt. Sender) des Lichtleitkabels (LL-Kabel) verbunden sind.

## Claims

1. Service-integrated communications transmission and exchange system for sound, picture and data with exchange equipment and a number of subscriber sets which are connected thereto by means of light-conducting cables (LL-Kabel) and have selecting and receiving equipments at disposal for the selection or reception of certain services or their programs which are transmitted over transmission channels which in a given case are likewise selectable, wherein an acknowledging equipment is provided, by means of which the switching of the services is acknowledgeable to the subscriber, wherein the acknowledgement contains the number of the service, the number of the program and the number of the used transmission channel, wherein the selection signals generated at the subscriber end by means of a selecting equipment are modulated and transmitted to the exchange equipment and there demodulated and decoded and wherein the acknowledgement signals together with the signals of the selected program are transmitted in modulated form to the subscriber set and there demodulated or decoded and indicatable on an indicating device, characterised thereby, that a store in the exchange equipment is respectively associated with the services, the programs and the transmission channels, contains the respective number and is read out on selection, that the read-out store contents yield the acknowledgement signals (Quitt. Signal) and that the selection signals are likewise indicatable on the indicating equipment (Anzeige).

2. Service-integrated communications transmission and exchange system according to claim 1, characterised thereby, that the modulation of the selection and acknowledgement signals takes place through keying on and off of a carrier frequency (f).

3. Service-integrated communications transmission and exchange system according to claim 1 and 2 characterised thereby, that the store is a shift register (R), which is shiftable by the clock pulse (T) and the output of which is conducted to the one input of a logic interlinking member, to the other input of which the carrier frequency (f) is applied and the output of which is switchable to the selected transmission channel.

4. Service-integrated communications transmission and exchange system according to claim 1 and 2 or 3, characterised thereby, that the acknowledging equipment at the receiver set contains shift register, the parallel outputs of which are connected with the inputs of the indicating equipment (Anzeige), the serial input of which is connected with the selecting equipment or with the optical receiver (opt. Empf.) of the light-conducting cable (LL-Kabel) and the serial output of which is connected with the optical transmitter (opt. Sender) of the light-conducting cable (LL-Kabel).

## Revendications

1. Système de transmission et de distribution de messages à intégration de services pour le son, l'image et des données, comprenant un dispositif distributeur et un certain nombre de postes d'abonnés qui sont raccordés par des câbles en fibres optiques (câble FO) et qui disposent de dispositifs de sélection et de réception pour choisir et recevoir certains services ou leurs programmes, transmis par des canaux de transmission qui peuvent éventuellement être choisis aussi, système dans lequel un dispositif de confirmation est prévu pour confirmer à l'abonné la distribution des services, la confirmation contenant le numéro du service, le numéro du programme et le numéro du canal de transmission utilisé, dans lequel les signaux de sélection, produits par l'abonné au moyen d'un dispositif de sélection, sont modulés et transmis au dispositif distributeur, où ils sont démodulés et décodés, et dans lequel les signaux de confirmation, modulés ensemble avec les signaux du programme choisi, sont transmis au poste d'abonné, où ils sont démodulés respectivement décodés et où ils peuvent être visualisés sur un dispositif d'affichage, caractérisé en ce que, dans le dispositif distributeur, une mémoire est conjuguée aux services, une aux programmes et une aux canaux de transmission, mémoire qui contient le numéro concerné, lequel est lu en cas de sélection, que les contenus lus des mémoires fournissent les signaux de confirmation (signal conf.) et que les signaux de sélection peuvent être visualisés sur le dispositif d'affichage (affichage).

2. Système selon la revendication 1, caractérisé en ce que la modulation des signaux de sélection et de confirmation s'effectue par introduction/extraction rythmée d'une fréquence porteuse (f) dans ou hors d'une mémoire.

3. Système selon la revendication 1 et 2, caractérisé en ce que la mémoire est un registre à décalage (R), qui peut être commandé avec le rythme (T) et dont la sortie est reliée à l'une des entrées d'un élément logique, dont une autre entrée reçoit la fréquence porteuse (f) et dont la sortie peut être commutée sur le canal de transmission sélectionné.

4. Système selon les revendications 1 et 2 ou 3, caractérisé en ce que le dispositif de confirmation contient, au poste d'abonné, un registre à décalage dont les sorties parallèles sont connectées aux entrées du dispositif d'affichage (affichage), dont l'entrée en série est connectée au dispositif de sélection respectivement au récepteur optique (réc. opt.) du câble en fibre optique (câble FO) et dont la sortie en série est connectée à l'émetteur optique (ém. opt.) du câble en fibre optique (câble FO).

Fig.1

Fig. 2

Fig. 3

| Takt -<br>Oszill.<br>T | | Träger<br>Oszill. f |
|---|---|---|

R   1/K2 → Quitt. Signal Fernsehprogramm 1<br>VHF - Kanal 2

R   1/ K4 → Quitt. Signal Fernsehprogramm 1<br>VHF - Kanal 4

R   2/ K2 → Quitt. Signal Fernsehprogramm 2<br>VHF - Kanal 2

R   2/ K 4 → Quitt. Signal Fernsehprogramm 2<br>VHF - Kanal 4

R   3/ K 2 → Quitt. Signal Fernsehprogramm 3<br>VHF - Kanal 2

R = Register

R   1/ K1 → Quitt. Signal UKW - Programm 1<br>UKW - Kanal 1

R   1/ K 2 → Quitt. Signal UKW - Programm 1<br>UKW - Kanal 2

R   2/ K1 → Quitt. Signal UKW - Programm 2<br>UKW - Kanal 1

R   2/ K 2 → Quitt. Signal UKW - Programm 2<br>UKW - Kanal 2

R   3/ K1 → Quitt. Signal UKW - Programm 3<br>UKW - Kanal 1

R = Register

0 042 133